# DEMANDE DE BREVET EUROPEEN

(11) **EP 2 161 435 A1**
(43) Date de publication de la demande: **10.03.2010**
(21) Numéro de dépôt: 09168586.7
(22) Date de dépôt: 25.08.2009
(51) Int. Cl.: F02D 35/02, F02D 41/00, F02D 41/18, F02D 41/22, F02D 41/24

(54) **Procédé de prédiction du risque de pré-allumage d'un moteur à combustion interne**

(30) Priorité: 09.09.2008 FR 0856036
(71) Demandeur: Peugeot Citroën Automobiles SA, 78140 Vélizy-Villacoublay (FR)
(72) Inventeur: Kubasik, Sébastien, 90500, Beaucourt (FR)

(57) **Abrégé**

L'invention concerne un procédé de prédiction du risque de pré-allumage d'un moteur à combustion interne à injection directe de véhicule automobile, le moteur comportant une ligne d'admission d'air, caractérisé en ce qu'il consiste à estimer un état d'encrassement (Eenc) de la ligne d'admission d'air pendant le fonctionnement du moteur à partir d'un incrément d'encrassement (INC) déterminé en fonction de paramètres de fonctionnement moteur, à comparer l'état d'encrassement (Eenc) à un seuil critique (Sc) pour en déduire une information (Benc) relative au risque de pré-allumage.

L'invention a aussi pour objet l'application du procédé à la prévention du super-cliquetis d'un moteur à combustion interne à injection directe essence, suralimenté.

## Description

### Domaine technique de l'invention

La présente invention se rapporte à un procédé de prédiction du risque de pré-allumage d'un moteur à combustion interne.

Elle s'applique plus particulièrement aux moteurs à allumage commandé à injection directe et notamment à ceux équipés d'une suralimentation.

### Arrière plan technologique

Dans un moteur à combustion interne à allumage commandé, une étincelle est déclenchée par un système d'allumage lorsque le piston approche de la fin de la course de compression afin d'initier la combustion du mélange air / carburant. Cependant le mélange peut s'enflammer spontanément au contact de zones chaudes, telles qu'une soupape d'échappement ou des résidus carbonés de combustion. Si ce phénomène a lieu avant l'étincelle de la bougie, on parle de pré-allumage.

Le pré-allumage peut entraîner l'auto-inflammation du mélange en favorisant les pics de pression. Au cours de cette auto-inflammation totale du mélange, aussi dénommée super cliquetis, les pressions atteintes au Point Mort Haut (PMH) sont si fortes qu'elles peuvent provoquer des tassements de bielle. La combustion est capable de s'amorcer plusieurs dizaines de degrés avant le point d'allumage. Les bougies jouent généralement le rôle de fusible, la céramique de la bougie est détruite.

Ce phénomène de pré-allumage affecte principalement les moteurs qui sont le résultat d'une opération de réduction de la cylindrée du moteur tout en conservant la même puissance et/ou le même couple que des moteurs conventionnels. Généralement, ce type de moteurs est principalement de type essence et est suralimenté.

Pour identifier ce phénomène, une solution connue est de mesurer les vibrations du moteur par un capteur de vibration, de détecter une vibration anormale sur la base d'un seuil d'amplitude prédéterminé ou encore d'un seuil de fréquence prédéterminée et de prendre des mesures correctives pour stopper au plus vite le phénomène telles qu'une coupure de l'injection de carburant du cylindre incriminé durant un certain nombre de cycles.

Cependant un tel moyen ne peut empêcher totalement le moteur d'être endommagé, car il détermine que le pré-allumage s'est produit que lorsqu'une vibration anormale, devenue significative est détectée, et toute action corrective est par conséquent en retard sur le phénomène de pré-allumage.

D'autres méthodes ont été proposées pour prédire un phénomène de pré-allumage ou d'auto-inflammation. Ainsi, le brevet JP2007224862 décrit un moyen de prédiction d'une combustion anormale telle que l'auto-inflammation basé sur une estimation de l'encrassement de la chambre de combustion établie à partir de paramètres tels que notamment l'état de dégradation de l'huile moteur et la détermination d'un temps cumulé d'usage du moteur sur des points de fonctionnement susceptibles de favoriser l'encrassement de la chambre.

Cependant, ce moyen est inadapté pour un moteur à combustion interne à injection directe. En effet, dans ce cas du moteur à combustion interne à injection directe, la chambre de combustion est généralement très propre car le carburant nettoie ladite chambre lors de son injection.

L'invention a pour but de pallier l'inconvénient du procédé de prédiction du pré-allumage selon l'art antérieur en proposant un nouveau procédé qui soit apte à prédire le pré-allumage d'un moteur à combustion interne, à injection directe, notamment de type essence et/ ou suralimenté.

L'invention concerne donc un procédé de prédiction du risque de pré-allumage d'un moteur à combustion interne à injection directe de véhicule automobile, le moteur comportant une ligne d'admission d'air, caractérisé en ce qu'il consiste à estimer un état d'encrassement de la ligne d'admission d'air pendant le fonctionnement du moteur à partir d'un incrément d'encrassement déterminé en fonction de paramètres de fonctionnement moteur, à comparer l'état d'encrassement à un seuil critique pour en déduire une information relative au risque de pré-allumage.

En effet, il a pu être constaté qu'un moteur à combustion interne à injection directe, notamment de type essence et ou suralimenté subit un encrassement extérieur à la chambre de combustion et en particulier un encrassement de la ligne d'admission. Le phénomène de pré-allumage est ensuite engendré par l'aspiration de particules diverses issues de la ligne d'admission.

Par ailleurs, l'invention peut comporter l'une ou plusieurs des caractéristiques suivantes :
- les paramètres de fonctionnement moteur sont choisis parmi au moins un des paramètres suivants : le régime moteur, la charge moteur, la vitesse du véhicule, le rendement d'avance, la coupure d'injection de carburant.
- Le procédé comprend une étape de détermination d'un premier paramètre d'encrassement en fonction des paramètres de fonctionnement moteur que sont le régime moteur et la charge moteur.
- Le procédé comprend une étape de détermination d'un second paramètre d'encrassement en fonction des paramètres de fonctionnement moteur que sont le rendement d'avance et la vitesse du véhicule.
- Le procédé comprend une étape de détermination d'un troisième paramètre d'encrassement en fonction du paramètre de fonctionnement moteur qu'est le régime moteur.
- Le procédé, comportant de plus la détermination d'un état de la coupure d'injection, détermine de la valeur de l'incrément d'encrassement, la valeur de l'incrément d'encrassement est un produit du premier paramètre et du second paramètre si la coupure d'injection n'est pas réalisée ou est déterminé par le troisième paramètre si la coupure d'injection est réalisée.
- La valeur de l'état d'encrassement n'est pas réinitialisée lors d'un arrêt du fonctionnement du moteur.

L'invention a aussi pour objet l'application du procédé à la prévention du super-cliquetis d'un moteur à combustion interne à injection directe essence, suralimenté et peut comporter la caractéristique suivante :
- Lorsque l'état d'encrassement atteint le seuil critique on applique au moins l'une des mesures suivantes : limiter les gradients de charge moteur, limiter le taux de remplissage d'air du moteur.

### Brève description des dessins

D'autres particularités et avantages apparaîtront à la lecture de la description ci-après d'un mode particulier de réalisation, non limitatif de l'invention, faite en référence aux figures dans lesquelles :
- La figure 1 est un schéma montrant les étapes d'élaboration d'une valeur de l'état d'encrassement.
- La figure 2 est un tableau illustrant un exemple de calibration d'un premier paramètre d'encrassement en fonction du régime moteur et de la charge.
- La figure 3 est un tableau illustrant un exemple de calibration d'un second paramètre d'encrassement en fonction de la vitesse du véhicule et du rendement d'avance.
- La figure 4 est un tableau illustrant un exemple de calibration d'un troisième paramètre d'encrassement en fonction du régime moteur.
- La figure 5 est une représentation graphique d'une simulation de l'évolution de la valeur de l'état d'encrassement sur un cycle d'homologation européen.
- La figure 6 est une représentation graphique d'une simulation de l'évolution de la valeur de l'état d'encrassement sur un roulage très dynamique et chargé.

### Description détaillée

II a pu être constaté qu'un moteur à combustion interne à injection directe pour un véhicule automobile, notamment de type essence et suralimenté, le moteur comportant de plus des chambres de combustion et une ligne d'admission d'air, non représentés dans le présent document, subit essentiellement un encrassement extérieur aux chambres de combustion et en particulier un encrassement de la ligne d'admission d'air. Du pré-allumage peut ensuite être engendré par l'aspiration de particules diverses issues de la ligne d'admission dans les chambres de combustion. Ainsi, plus l'encrassement de la ligne d'admission est important, plus le risque de pré-allumage et d'apparition d'auto-inflammation du mélange air/carburant présent dans la chambre de combustion, dénommé aussi super-cliquetis en cas d'auto-inflammation totale du mélange, est élevé.

Il a été de plus observé que l'historique du véhicule, notamment son type de roulage, peut prévenir d'une sensibilité plus ou moins forte à l'apparition de pré-allumage et au risque de super-cliquetis.

Sur la base de ces observations, la présente proposition d'invention consiste à mettre en place une variable d'état d'encrassement Eenc, servant d'historique, qui comptabilise le temps passé sur des points de fonctionnements moteur identifiés comme aggravant ou bénéfiques pour l'encrassement de la ligne d'admission d'air et reflète par sa valeur le risque à venir de pré-allumage et d'auto-inflammation du mélange air/carburant. Cette variable d'état d'encrassement Eenc doit être gardée en mémoire et ne doit pas être réinitialisée à 0 en cas d'arrêt du fonctionnement du moteur

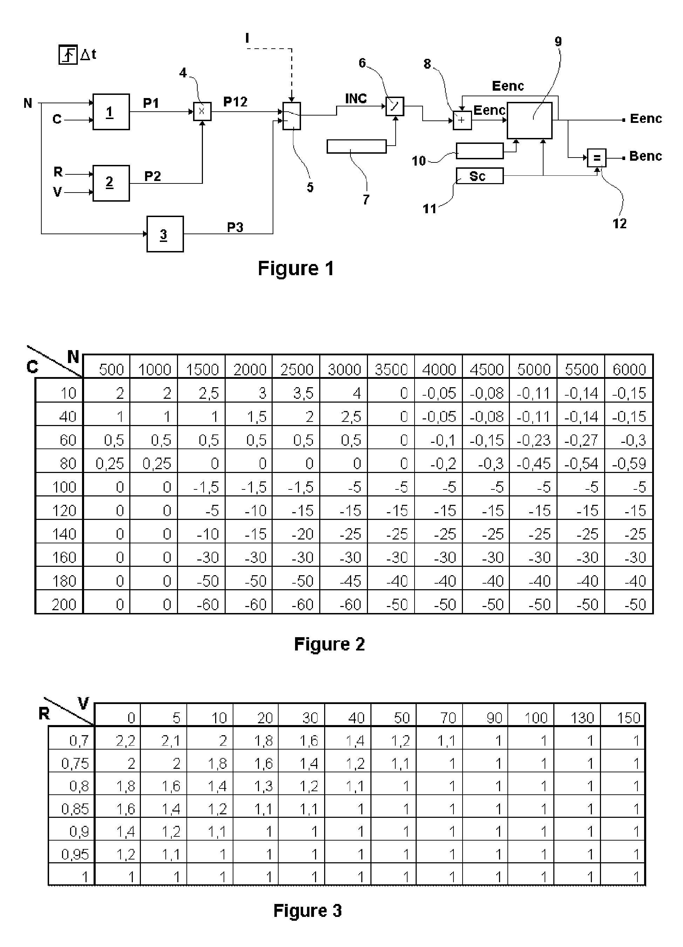

La figure 1 est un schéma montrant l'élaboration d'une valeur de l'état d'encrassement Eenc déterminée à partir de paramètres moteur identifiés comme influents sur l'encrassement de la ligne d'admission.

Ainsi dans le présent mode d'obtention de la valeur de l'état d'encrassement Eenc décrit en figure 1, ledit état d'encrassement Eenc est déterminé à partir du relevé d'au moins un des paramètres moteur suivants : un régime moteur N, une charge moteur C, un rendement d'avance R, une vitesse de véhicule V et d'un indicateur, I, d'état de la coupure d'injection. Ces paramètres de fonctionnement moteur sont importants mais cependant non exhaustifs, d'autres critères pourrait être pris en compte en tel que, par exemple, la qualité du carburant sans modifier la portée de l'invention décrite ici.

L'indicateur I d'état de la coupure d'injection est une variable à deux états, exemple une variable de type booléenne, dont la valeur est déterminée selon que l'injection de carburant est coupée (I= VRAI) ou non (I=FAUX).

Le régime moteur N et la charge C servent de données d'entrée à une première cartographie 1. Cette première cartographie 1 permet de déterminer un premier paramètre d'encrassement P1. Ce premier paramètre d'encrassement P1 constitue un incrément de base dans la détermination globale de la valeur de l'état d'encrassement Eenc

Le rendement d'avance R et la vitesse de véhicule V servent de données d'entrée à une seconde cartographie 2. Cette seconde cartographie 2 permet de déterminer un second paramètre d'encrassement P2. Ce second paramètre d'encrassement P2 constitue un coefficient pondérateur. Le rendement d'avance R caractérise le rendement d'une combustion en fonction de l'avance à l'allumage. Plus le rendement d'avance est faible, plus les imbrûlés présents dans la chambre de combustion sont nombreux, et plus le risque d'observer une auto-inflammation est élevé. La vitesse du véhicule V a une influence sur le risque d'auto-inflammation car elle signifie un débit d'air frais d'autant plus important que la vitesse V est grande.

Le régime moteur N sert encore de donnée d'entrée à une troisième cartographie 3. Cette troisième cartographie permet de déterminer un troisième paramètre d'encrassement P3. Ce troisième paramètre d'encrassement P3 constitue un incrément d'encrassement à prendre en compte quand la coupure d'injection est réalisée (I=VRAI). En effet, en cours de roulage du véhicule, lorsque d'une coupure d'injection est réalisée, par exemple lors d'un lever de pied du conducteur sur une pédale d'accélérateur, nous considérons que le seul paramètre influent est le régime N. Toutefois, la dépression de la ligne d'admission d'air est importante, ce qui peut entrainer beaucoup d'aspiration de salissures contenues dans ladite ligne d'admission d'air, ceci indépendamment d'autres paramètres de fonctionnement moteur.

Les premières, secondes et troisièmes cartographies 1, 2 et 3 peuvent être déterminées, par exemple, à partir de courbes de calibration obtenues par des essais sur banc moteur ou par des calculs de modélisation.

Le produit P12 du premier paramètre P1 et du second paramètre P2 est ensuite réalisé en 4. En 5, on décide, au regard de la valeur de l'indicateur I d'état de la coupure d'injection, de choisir comme incrément d'encrassement INC le produit P12 si la coupure d'injection n'est pas réalisée (I=VRAI) ou le paramètre P3 si la coupure d'injection est réalisée (I=FAUX).

L'incrément d'encrassement INC peut ensuite être échelonné en 6 à l'aide d'un coefficient d'échelle 7 permettant de faciliter le passage à une échelle de 100%.

En 8, l'incrément d'encrassement INC est ajouté à la valeur de l'état d'encrassement Eenc. La détermination de l'incrément d'encrassement INC est réalisée à intervalle de temps Δt successifs, de l'ordre par exemple de 100 ms, la valeur de l'état d'encrassement Eenc étant la somme des incréments d'encrassement INC déterminé à chaque pas de temps Δt.

La valeur de l'état d'encrassement Eenc peut ensuite être bornée en 9 entre un seuil d'encrassement nul 10 et un seuil critique Sc d'encrassement 11. En 12, on compare la valeur de l'état d'encrassement Eenc au seuil critique Sc pour en déduire une information Benc relative au risque de pré-allumage. Cette information Benc peut être une variable de type booléen et caractériser un risque ou une probabilité maximum d'obtenir du pré-allumage (Benc=VRAI).

La figure 2 représente un exemple de calibration du premier paramètre d'encrassement P1 en fonction du régime moteur N et de la charge C. Ce premier paramètre d'encrassement P1 peut être positif si le point de fonctionnement moteur considéré est aggravant pour l'encrassement de la ligne d'admission d'air, à l'exemple des points de fonctionnement en faible régime et faible charge ou négatif si le point de fonctionnement moteur considéré est bénéfique et contribue à désencrasser la ligne d'admission, à l'exemple des points de fonctionnement en fort régime et forte charge, car alors le débit d'air est élevé et est apte à décrocher les salissures accumulées dans la ligne d'admission.

La figure 3 représente un exemple de calibration du second paramètre d'encrassement P2 en fonction de la vitesse du véhicule V et du rendement d'avance R. S'agissant d'un coefficient de pondération, le second paramètre d'encrassement est ici toujours positif et contribue à augmenter l'incrément d'encrassement INC dans le cas notamment de points de fonctionnement à faible rendement d'avance R et faible vitesse véhicule V.

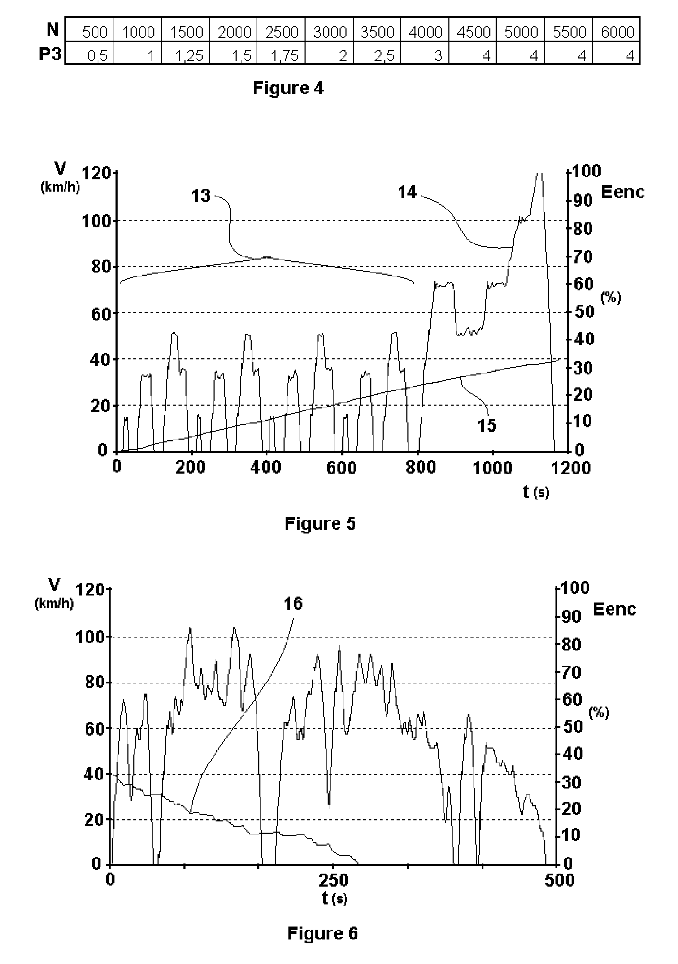

La figure 4 représente un exemple de calibration du troisième paramètre d'encrassement P3 en fonction du régime moteur uniquement.

Les valeurs des paramètres P1, P2 et P3 présentés dans les figures 2 à 4 ne constituent que des exemples. Ces paramètres peuvent être adaptés librement selon les zones de fonctionnement et/ou de la valeur de l'intervalle de temps Δt (une diminution de Δt entraînant, par exemple, une révision à la baisse des valeurs des paramètres P1, P2 et P3 prédéterminés pour compenser la hausse de fréquence de détermination de l'incrément d'encrassement INC).

La figure 5 est une simulation de l'évolution de la valeur de l'état d'encrassement Eenc sur un cycle d'homologation des véhicules en Europe comprenant un cycle urbain 13 (ECE pour Economic Commission of Europe) d'une durée de 800 secondes et un cycle extra-urbain 14 (EUDC, pour Extra Urban Driving Cycle) d'une durée de 400 secondes et comportant une phase de roulage jusqu'à 120 km/h.

Ce cycle d'homologation n'est pas obligatoire pour la réalisation de l'invention. Il ne représente qu'un exemple concret d'application sensé représenter des conditions de conduite essentiellement urbaines, c'est-à-dire à vitesse véhicule V généralement faibles et un fonctionnement moteur à faible régime N et faible charge C, et un support pédagogique pour mieux illustrer certaines caractéristiques fonctionnelles de l'invention décrites dans ce document.

Sur la base des calibrations présentées en figure 2 à 4, la valeur finale de l'état d'encrassement Eenc représenté sur la courbe 15, après un roulage sur le cycle d'homologation européen 13 et 14 est de 33%, ce qui signifie qu'au bout de trois essais de ce type, on considérera le moteur comme encrassé et potentiellement enclin au super-cliquetis.

La figure 6 est une simulation de l'évolution de la valeur de l'état d'encrassement Eenc sur un roulage très dynamique et chargé. La valeur de l'état d'encrassement Eenc représenté sur la courbe 16 est volontairement initialisée à 33% comme pour faire suite au roulage sur le cycle européen présenté en figure 5. Sur la base des calibrations présentées en figure 2 à 4, en 300 secondes de roulage chargé, la valeur de l'état d'encrassement Eenc est nulle : le moteur est de nouveau considéré à l'abri du super-cliquetis.

Nous disposons donc d'une variable d'état d'encrassement Enc qui est l'image de l'encrassement de la ligne d'admission d'air du moteur et donc indirectement du risque d'apparition du super-cliquetis.

Il a été constaté que le plus souvent, c'est une mise en pleine charge qui provoque le super-cliquetis. Une hypothèse forte est que durant une période de fonctionnement moteur à faible régime N et faible charge C, c'est-à-dire, dans le cas d'un moteur à combustion interne à injection directe essence suralimenté, ne sollicitant pas ou peu la suralimentation, la ligne d'admission d'air se charge de particules telles que, à titre d'exemple de l'huile, de l'essence ou encore des suies. Lors de la mise en pleine charge C la suralimentation est sollicitée à son maximum et l'augmentation du débit d'air provoque un décollement de ces particules qui sont alors aspirées vers la chambre de combustion, ce qui déclenche le super-cliquetis.

Ainsi, si la valeur de l'état d'encrassement Eenc atteint le seuil critique Sc, cela signifie que la probabilité d'obtenir du pré-allumage et un risque de super-cliquetis dès le passage en plein charge est maximal (Benc=VRAI), il est donc nécessaire, dans le cas d'un moteur à combustion interne à injection directe essence suralimenté, de ne pas autoriser un tel niveau de suralimentation.

Pour éviter l'apparition du phénomène, plusieurs mesures efficaces sont possibles à appliquer, parmi lesquelles, à titre indicatif :
- Limiter le taux de remplissage maximum en air du moteur en réduisant par exemple le croisement de soupapes d'admission et d'échappement du moteur.
- Limiter les gradients de charge moteur C durant les phases de transition de fonctionnement moteur. Par exemple, lors d'une demande de pleine charge par un conducteur de véhicule, le gradient de charge C peut être limité en filtrant la demande du conducteur de façon atteindre progressivement la pleine charge et ainsi limiter l'augmentation de débit d'air d'admission et le risque de décollement des particules accumulées dans la ligne d'admission.

## Revendications

1. Procédé de prédiction du risque de pré-allumage d'un moteur à combustion interne à injection directe de véhicule automobile, le moteur comportant une ligne d'admission d'air, **caractérisé en ce qu'**il consiste à estimer un état d'encrassement (Eenc) de la ligne d'admission d'air pendant le fonctionnement du moteur à partir d'un incrément d'encrassement (INC) déterminé en fonction de paramètres de fonctionnement moteur, à comparer l'état d'encrassement (Eenc) à un seuil critique (Sc) pour en déduire une information (Benc) relative au risque de pré-allumage.

2. Procédé selon la revendication 1, **caractérisé en ce que** les paramètres de fonctionnement moteur sont choisis parmi au moins un des paramètres suivants : le régime moteur (N), la charge moteur (C), la vitesse du véhicule (V), le rendement d'avance (R), la coupure d'injection de carburant (I).

3. Procédé selon la revendication 2, **caractérisé en ce qu'**il comprend une étape de détermination d'un premier paramètre d'encrassement (P1) en fonction des paramètres de fonctionnement moteur que sont le régime moteur (N) et la charge moteur (C).

4. Procédé selon la revendication 2 ou la revendication 3, **caractérisé en ce qu'**il comprend une étape de détermination d'un second paramètre d'encrassement (P2) en fonction des paramètres de fonctionnement moteur que sont le rendement d'avance (R) et la vitesse du véhicule (V).

5. Procédé selon l'une quelconque des revendications 2 à 4, **caractérisé en ce qu'**il comprend une étape de détermination d'un troisième paramètre d'encrassement (P3) en fonction du paramètre de fonctionnement moteur qu'est le régime moteur (N).

6. Procédé selon la combinaison des revendications 3 à 5, comportant de plus la détermination d'un état de la coupure d'injection (I), **caractérisé en ce que** dans la détermination de la valeur de l'incrément d'encrassement (INC), la valeur de l'incrément d'encrassement (INC) est un produit du premier paramètre (P1) et du second paramètre (P2) si la coupure d'injection n'est pas réalisée ou est déterminé par le troisième paramètre (P3) si la coupure d'injection est réalisée.

7. Procédé selon l'une quelconques des revendications précédentes, **caractérisé en ce que** la valeur de l'état d'encrassement (Eenc) n'est pas réinitialisée lors d'un arrêt du fonctionnement du moteur.

8. Application du procédé selon l'une quelconque des revendications précédentes à la prévention du super-cliquetis d'un moteur à combustion interne à injection directe essence, suralimenté.

9. Application selon la revendication 8, **caractérisée en ce que** lorsque l'état d'encrassement (Eenc) atteint le seuil critique (Sc) on applique au moins l'une des mesures suivantes : limiter les gradients de charge moteur C, limiter le taux de remplissage d'air du moteur.
